Europäisches Patentamt

**European Patent Office** (11) Publication number: **0 133 280**
A2

Office européen des brevets

(12) **EUROPEAN PATENT APPLICATION**

(21) Application number: **84108756.2** (51) Int. Cl.⁴: **B 32 B 17/04,** B 32 B 27/12,
C 08 J 5/24, C 08 L 63/00
(22) Date of filing: **24.07.84** // (C08L63/00, 21/00)

(30) Priority: **01.08.83 US 518871**

(71) Applicant: **AMERICAN CYANAMID COMPANY,
1937 West Main Street P.O. Box 60, Stamford
Connecticut 06904 (US)**

(43) Date of publication of application: **20.02.85
Bulletin 85/8**

(72) Inventor: **Krieger, Jr., Raymond B., 606 Leight Road,
Abingdon Maryland 21009 (US)**
Inventor: **Hirschbuehler, Kevin, 503 East Broadway, Bel
Air Maryland 21014 (US)**
Inventor: **Politi, Robert E., 314 Tareyton Court, Bel Air
Maryland 21014 (US)**

(74) Representative: **Wächtershäuser, Günter, Dr.,
Gewürzmühlstrasse 5, D-8000 München 22 (DE)**

(84) Designated Contracting States: **BE DE FR GB IT NL SE**

(54) Thermoset interleafed resin matrix composites with improved compression properties.

㊐ Resin fiber matrix compositions comprised of reinforcing filaments and curable polyaddition products of epoxy prepolymers and diamines provide high compressive strength composites when interleafed with elastomermodified curable epoxy prepolymer interlayers.

EP 0 133 280 A2

29,094 .

# THERMOSET INTERLEAFED RESIN MATRIX COMPOSITES

## WITH IMPROVED COMPRESSION PROPERTIES

### FIELD OF THE INVENTION

This invention relates to interleafed fiber resin matrix materials. More particularly, the invention relates to reinforced, interleafed fiber resin matrix composites having improved compression chracteristics and improved shear strength.

### BACKGROUND OF THE INVENTION

High strength to weight materials constructed from fiber resin matrix composites have become widely used in many industries where strength, corrosion resistance and light weight are desirable. For example, resin matrix materials are particularly well suited for use in aircraft structural members. Sporting equipment, such as tennis racquets and golf clubs, has also been successfully constructed from such materials.

Fiber resin matrix composites are typically comprised of a dense layer of strong reinforcing filaments coated with a thermoset resin to form a curable sheet. The sheet can then be formed to desired shapes and cured. Numerous reinforced resin matrix composites have been described in the art, of which U.S. Patents 2,561,449 (Ruderman), 2,810,674 (Madden), 3,010,848 (Rochas et al), 3,649,435 (Varlas), 3,755,061 (Schurb), 3,914,494 (Park), 4,182,495 (Borgmeier et al), 4,309,473 (Minamisaway et al), 4,343,843 (Johnson et al) and 3,472,730 (Frigstad) and British Patent No. 1,182,377 are representative. (All of the above patents are hereby incorporated by reference).

In the Frigstad patent, U.S. 3,472,730, filament-reinforced resinous sheeting is disclosed which comprises a thin layer of high-strength filaments coated with a heat-curable resin composition and a separate exterior film on at least one side of the filament-reinforced layer comprising a heat-curable resin composition modified with a resin that contains elastomeric material.

## SUMMARY OF THE INVENTION

It has now been discovered that certain epoxy resin composites comprising alternating layers of a filament-reinforced resin, called a fiber resin matrix, and a modified epoxy resin, called an interleaf resin, show greatly improved resistance to impact damage over a broad range of temperatures (e.g., -67°F to +200°F). By matching the fiber matrix resin and interleaf resin components according to this invention, high-strength, impact-resistant composites may be achieved which show marked improvement over known materials.

Preferably, the interleafed fiber resin matrix composite comprises:

(A) A fiber resin matrix layer comprising (i) high-strength reinforcing filaments, preferably about 60%-70% by weight, and (ii) a thermosetting epoxy resin composition, preferably about 30%-40% by weight, coating said filaments, and

(B) A discrete interleaf resin layer comprising (i) a thermosetting epoxy resin composition containing (ii) about 8% to 70% by weight of a rubbery vinyl addition polymer,

wherein said epoxy resin composition (A)(ii) exhibits shear modulus of at least 50,000 psi at high temperatures under wet conditions, and said interleaf resin (B) exhibits shear modulus above 50,000 psi and a yield strength above 3000 psi at high temperatures, and shear strain to failure of at least 6% at -67°F, at least 15% at room temperature and at least 25% at high temperatures.

Illustratively, a thermosetting resin is prepared for a matrix of resin and fiber wherein the resin is, for example, formed of tetra (4,4') N-glycidyl methylene dianiline, tetra glycidoxy tetraphenylethane, trimethylene glycidoxy-di-para-aminobenzoate, fumed silica and the reaction product of toluene 2,4-diisocyanate and dimethylamine.

The resin serves as the resin component in the resin fiber matrix and provides in effect about 30%-40% preferably 34%, of the composite structure.

An interleaf structure which is spread on the fiber matrix resin is also provided in the process and composition of this invention. The interleafing material is similar to the matrix resin in that it too is thermosetting, but differs chemically from the matrix resin. The interleaf resin is comprised of a mix of prereacted materials and a final material. The prereacted material is, for example, comprised of carboxylic-functional butadiene acrylonitrile polymer, diglycidyl ether of tetrabromo bisphenol A, diglycidyl ether of bisphenol A, bisphenol A, triphenyl phosphine and diaminodiphenyl sulfone. The pre-reactive material is mixed with tetra (4,4') N-glycidyl methylene dianiline, diaminodiphenyl sulfone, dicyandiamide, carboxylic functional butadiene acrylonitrile polymer, and titanium dioxide to provide the uncured interleaf material. The interleaf material is cast on one side of the matrix in a coating range of approximately .009 to .013 pounds per square foot to provide an interleafed fiber resin matrix material ready for shaping and curing into a final product, such as an airplane fuselage or wing cover, or stiffened skin.

For the purposes of the present invention, the term "high temperatures" refers to any temperature in a range of from about 180°F to 200°F. The term "wet conditions" refers to a test condition where the sample to be tested has been immersed in water at 160°F for 14 days, or to any environmental exposure to moisture that produces a like condition.

DESCRIPTION OF THE DRAWINGS

FIGURE 1 is a schematic of the process of preparing a fiber resin matrix composite of the present invention.

FIGURE 2 is a schematic of a process for providing an interleafing material on a fiber resin matrix in accordance with this invention.

FIGURE 3 is an enlarged cross-sectional view of the interleafed fiber resin matrix composite of the subject invention.

FIGURE 4 is a portion of a stack of composites, illustrating (with exaggerated cross lines) the desirable cross-linking between the discrete layers.

FIGURE 5 is a graph illustrating the relative shear stress/strain curves for the resin of the fiber resin matrix and the interleaf resin.

## DESCRIPTION OF THE PREFERRED EMBODIMENTS

The present invention is directed to the provision of a laminate layer referred to as an interleaf for use in a composite structure of a fiber resin matrix and the interleaf.

The fundamental discovery underlying the present invention is that a resin having particular mechanical properties, when used to provide thin, discrete layers between fiber-reinforced layers of a fiber resin matrix composite, results in a composite having unique toughness, shear resistance, and resistance to impact damage, and these properties are exhibited over a broad range of temperatures, e.g., from -67°F to 200°F. This performance is achieved by pairing a matrix resin having particular high-temperature properties and an interleaf resin having some elastomeric properties to form a composite structure of alternating fiber resin matrix and interleaf resin layers.

Thus, the invention further resides in the fact that resins have been developed that are well suited for use as particular interleaf materials to provide a fiber resin matrix and interleaf resin composite of superior toughness.

It is particularly significant in this invention that the interleaf material contains a quantity of rubbery (elastomeric) material and that the interleaf resin and the resin of the fiber resin matrix be sufficiently compatible to form strong cross-links across the resin interface; yet, the interleaf material must be capable of being viscosity controlled to prevent intermixing, and a discrete interleaf layer must be achieved.

It has been discovered that the interleafed composites of the present invention, besides exhibiting the high compression, tensile and flexural strengths characteristic of fiber resin matrices, also exhibit an unexpected ability to withstand impact damage, and over a wide range of temperatures (e.g., samples are tested at from -67°F to +200°F). The interleafed composites of the present invention, for example, show greater toughness, greater resistance to shear impact, greater tolerance of impact damage and greater resistance to crack propagation than conventional fiber resin matrix composites.

The dynamic relationship between the fiber resin matrix component and the interleaf resin component of the present composites is complex, however in general the interleaf resin provides toughness, i.e., high impact strength, to the composite at all temperatures, while the matrix resin is highly resistant to the effects of wet conditions and changes in temperature. The interleaf resin layers are also designed to protect the fiber matrix layers by absorbing or otherwise "heading off" damaging forces before they reach levels harmful to the fiber resin matrix. When subjected to shear forces, for instance, the interleaf materials suitable for the purposes herein show great elongation above a certain shear stress level, and the components are paired so that the interleaf resin layer will flex and absorb the energy of the shear load as it approaches a level at which the fiber resin matrix will fail. If impact loads reach such levels that the structure cracks, the high strain capabilities of the interleaf layer help to maintain the integrity of the structure by increasing the energy required to drive cracks through the laminate. In this way crack propagation, even after damage, is curtailed; and by selecting the components to provide this sort of interprotective relationship, high-performance composites can be achieved.

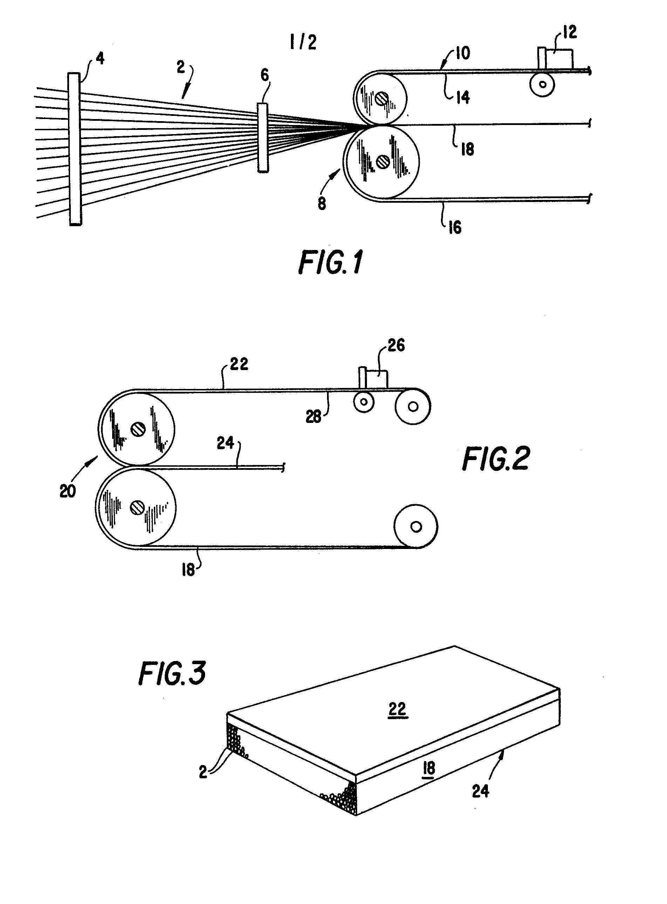

As seen in FIGURE 1, the basic fiber matrix material may be produced by delivering reinforcing filaments 2 through conventional eye-boards 4 and 6 to a pressure roller assembly 8. The curable epoxy resin composition is coated in a layer 10 from a conventional film coating applicator 12 onto a substrate such as release paper 14 and passed through the pressure roller assembly 8. Release paper 16 is also delivered to the pressure roller assembly 8.

The pressure rollers 10 are set at a temperature and pressure for imbedding the fibers 2 in the resin layer 10 to form a fiber resin matrix 18. Practice has taught that a temperature in the range of 190°F and pressures of one thousand pounds over a fifteen inch center are suitable for producing a fiber resin matrix 18.

The fibers 2, the substrate 14 with resin layer 10 and the release paper 16 are delivered to the pressure rollers 8 and passed therethrough at the rate of 3-20 feet/minute.

The feed of fiber 2 and resin layer 10 to the pressure rollers 8 is selected to produce a fiber matrix of about 30-40 weight percent (preferably 34 weight percent) resin and about 60-70 weight percent (preferably 66 weight percent) fiber. For example, 120 filaments of 6K carbon fibers are delivered within a twelve inch width to the pressure rollers 8 with a layer of resin .013 to .018 pounds per square foot. The resulting fiber resin matrix 18 results in a closely packed array of fibers. Therefore, as shown in FIGURE 2, the release paper on one side of the fiber resin matrix 18 is removed and the fiber resin matrix is passed through another set of pressure rollers 20 for the application of the uncured interleaf material to the fiber resin matrix 18.

A layer 22 of interleaf material is spread again by a conventional applicator 26 on a release paper 28 and delivered simultaneously with the fiber resin matrix 18 through pressure rollers 20. The interleaf material is spread on the release paper 18 at a rate to provide an interleaf layer of, for example, 0.007 to 0.015 pounds per square foot. The pressure rollers 20 are set at the lowest pressure, e.g., 1 pound over the width of the rollers 20, and a temperature of about 120°F. The exposed surface of the fiber resin matrix 18 is presented to the interleaf material 22 and the two are joined by the inherent adhesive nature of the fiber resin matrix 18. The interleaf material is essentially elastomeric and thus virtually without any adhesive characteristics.

The interleafed fiber resin composite 24 is thus produced and appears as shown in FIGURE 3.

The reinforcing filaments useful in the present invention include, but are not limited to, filaments comprised of glass, carbon, graphite, silicon carbide, boron, aramid, polyester, polyamide, rayon, polybenzimidazole, polybenzothiazole, metal-coated such filaments, for example nickel-coated and/or silver-coated graphite fibers and filaments, or combinations of such filaments. In applications demanding a high strength to weight ratio or shear strength, carbon fibers, graphite filaments, polyaramid filaments or nickel-plated graphite filaments, are preferred.

The epoxy resin composition used to coat the reinforcing filaments (matrix resin) is comprised primarily of epoxy compounds having more than one epoxide group per molecule available for reaction. Such epoxy prepolymers include, but are not limited to, polyfunctional ethers of polyvalent phenols, for example pyrocatechol; resorcinol; hydroquinone; 4,4'-dihydroxydiphenyl methane; 4,4'-dihydroxy3,3'-dimethyldiphenyl methane; 4,4'-dihydroxydiphenyl dimethyl methane; 4,4'-dihydroxydiphenyl methyl methane; 4,4'-dihydroxydiphenyl cyclohexane; 4,4'-dihydroxy3,3'-dimethyldiphenyl propane; 4,4'-dihydroxydiphenyl sulphone; or tris-(4-hydroxyphenyl) methane; polyglycidyl ethers of the chlorination and bromination products of the above-mentioned diphenols; polyglycidyl ethers of novolacs (i.e., reaction products of monohydric or polyhydric phenols with aldehydes, formaldehyde in particular, in the presence of acid catalysts); polyglycidyl ethers of diphenols obtained by esterifying 2 mols of the sodium salt of an aromatic hydroxycarboxylic acid with 1 mol of a dihalogenoalkane or dihalogen dialkyl ether (see, U.K. 1,017,612); and polyglycidyl ethers of polyphenols obtained by condensing phenols and long-chain halogen paraffins containing at least 2 halogen atoms (see, U.K. 1,024,288).

Other suitable compounds include polyepoxy compounds based on aromatic amines and epichlorohydrin, for example N,N'-diglycidylaniline; N,N'-dimethyl-N,N'-diglycidyl-4,4'-diaminodiphenyl methane; N-diglycidyl-4-aminophenyl glycidyl ether; N,N,N',N'-tetraglycidyl-4,4'-diaminodiphenyl methane; and N,N,N',N'-tetraglycidyl-1,3-propylene bis-4-aminobenzoate, the latter two compounds being most preferred.

Glycidyl esters and/or epoxycyclohexyl esters or aromatic, aliphatic and cycloaliphatic polycarboxylic acids, for example phthalic acid diglycidyl ester and adipic ester diglycidyl and glycidyl esters of reaction products of 1 mol of an aromatic or cycloaliphatic di-carboxylic acid anhydride and ½ mol of a diol or 1/n mol of a polyol with n hydroxyl groups, or hexahydrophthalic acid diglycidyl esters, optionally substituted by methyl groups, are also suitable.

Glycidyl ethers of polyhydric alcohols, for example of 1,4-butanediol; 1,4-butenediol; glycerol; 1,1,1-trimethylol propane; pentaerythritol and polyethylene glycols may also be used. Triglycidyl isocyanurate; and polyglycidyl thioethers of polyvalent thiols, for example of bis mercaptomethylbenzene; and diglycidyltrimethylene sulphone, are also suitable.

The epoxy resin composition will also include a curing agent for the epoxy resin. Such curing agents are well known to those skilled in the art, and preferred curing agents for the purposes herein will be diamines, including, but not limited to, diaminodiphenyl sulphone, diaminodiphenyl methane, phenylenediamine, etc.

The amount of curing agent necessary for a particular application can be readily determined by persons skilled in the art and will vary according to the precise makeup of the resin composition, the curing conditions desired and other factors. However, by way of illustration, where a diamine curing agent is employed, from about 20 to 40 weight percent, most preferably about 27 to 31 weight percent, based on the total epoxy resin, has been found suitable.

Fillers, dyes, pigments, plasticizers, curing catalysts and other such conventional additives and processing aids may be added to the epoxy resin compositions described herein before curing to influence the properties of the final resin composite.

The heat-curable epoxy resin of the interleaf layer comprises 30% by weight or more epoxy resin composition and from about 8% to 70% by weight of a rubbery vinyl addition polymer. The suitable epoxy resins (and curing agents) are of the same type disclosed above, although the particular epoxy resin employed in the interleaf will typically be a different resin than that selected for use in the fiber resin matrix layer.

It has been discovered that in order to provide the unique advantages of the present invention, the epoxy resin compositions, that is, the matrix resin (which coats the reinforcing filaments) and the interleaf resin, must exhibit specific properties. The matrix resin, when tested "neat", or without reinforcement, must show a minimum stiffness when subjected to shear forces, especially at high temperatures and under wet conditions. The matrix resin must have a shear modulus of at least 90,000 psi under hot, dry conditions, e.g., when subjected to shear at 200°F, or a shear modulus of at least 50,000 psi under hot, wet conditions, e.g. when subjected to shear at 200°F after soaking in water for 14 days. It is also necessary that the matrix resin have a shear modulus above about 100,000 at room temperature and extremely low temperatures, i.e., -67°F, however, this is ordinarily the case where the modulus at 180°-200°F is as high as 50,000 psi. Preferred matrix resin compositions will show an initial shear modulus of 90,000 psi or above under hot, wet conditions, and will show an initial shear modulus of 130,000 psi or above at room temperature and low temperatures. The most preferred epoxy resins for use as a matrix resin will also exhibit high strength, for example an ultimate stress over 3000 psi, most preferably 5000 psi or above.

The interleaf resin must also exhibit a minimum initial shear modulus, and in addition the interleaf resin must show elongation above a minimum stress. This initial modulus is believed to transfer loads between the layers of the reinforcing fibers without large deformation of the structure. For the purposes herein, the interleaf material must have an initial shear modulus above 50,000 psi at high temperatures, preferably above 90,000 psi at 200°F. At room temperature the initial shear modulus for the interleaf should be at least about 100,000 psi (preferably at least 130,000 psi), and at -67°F the shear modulus should be at least about 130,000 psi (preferably at least 150,000 psi); however, as with the matrix resin, such values at room temperature and low temperatures would be expected with high shear modulus at elevated temperatures.

The interleaf resin shows an initial rigidity (high modulus) when subjected to shear but at a certain level of shear stress, shows elongation (high ultimate strain). The point at which the resin begins to show high elongation in response to stress is the yield strength of the resin, and for the purposes herein, this must be at least about 3000 psi at high temperatures. The yield strength for the interleaf resin should be at least about 5000 psi at room temperature; and at -67°F, where there is ordinarily no definite "knee" or yield point, the ultimate stress (stress at failure) should be about 6000 psi or above. Most preferred interleaf resins will have a room temperature yield strength of at least about 6000 psi and a high temperature yield strength of at least about 5000 psi.

The degree of elongation after reaching the yield point is also important. The interleaf resin must have an overall elongation or strain to failure of at least 6%, preferably 9%, at -67°F, and a stain to failure at room temperature of at least about 15%, preferably 25% or greater. This property is less important at elevated temperatures, but preferred interleaf resins will have a strain to failure of over 20%, most preferably over 50% at 200°F.

The rubbery vinyl addition polymers contemplated herein include homopolymeric and copolymeric diene rubbers, derived from conjugated dienes of 4 to 8 carbons such as butadiene, isoprene, propylene, chloroprene, and the like. These include but are not limited to copolymers of such dienes with each other and with one or more of such monomers as styrene, acrylonitrile, methacrylonitrile, acrylic acid, methacrylic acid, methyl methacrylate, and the like. Butadiene-acrylonitrile polymers and carboxylic-functional butadiene-acrylonitrile polymers are most preferred.

The amount of rubbery modifier present can vary from 8 to 70 weight percent, and the specific amounts employed must be sufficient to impart elasticity and toughness to the interleaf resin. Preferably, about 8 to 24 weight percent of the modifier will be used; and where the preferred butadiene-acrylonitrile copolymers are employed, a level of 10 to 15 weight percent is most preferred.

o

EXAMPLES

Example 1

The following example illustrates the improvement of the present resin matrix material over prior art materials. A matrix resin 10 according to the present invention was made according to the following formulation:

| | parts by weight |
|---|---|
| tetra(4,4')N-glycidyl methylene dianiline (Ciba Geigy Araldite® MY-720) | 80 |
| tetraglycidoxy tetraphenylethane (Shell Epon® 1031) | 20 |
| trimethylene glycol di-para-aminobenzoate (Polaroid Polacure® 740 M) | 44 |
| fumed silica ($SiO_2$) (Cabot Cab-o-Sil® M-5) | 6 |
| reaction product of toluene diisocyanate and dimethylamine | 1 |

The fiber resin matrix 18 made by coating the above formulation on a layer of collimated graphite fibers was cast into a structural part by stacking 8 to 36 sheets of the fiber resin matrix 18 in a conventional alternating layer stack and curing in an antoclave at 350°F and 100 psi for 2 hours. The resulting article was tested for strength and exhibited the following properties, as compared to a commercial fiber resin matrix (CYCOM® 985-1; American Cyanamid Co.):

|  | UNI-COMP* @200°F Wet (8 sheets) | QUASI-COMP** @200°F Wet (16 sheets) | COMP/IMPACT*** 1500 in-lbs/in (36 sheets) |
|---|---|---|---|
| Sample | | | |
| commercial resin matrix | 140,000 psi | 72,000 psi | 24,000 psi |
| cured matrix 18 (this invention) | 123,000 psi | 65,300 psi | 31,600 psi |

*Unidirectional Compression Strength

**Quasi-isotropic Compression Strength

***Compression Strength After Impact

The same fiber resin matrix 18 was then provided with an interleaf made according to the following formulation.

The following pre-mix was charged to a vessel and prepared in situ at 300°F for four hours:

| | parts by weight |
|---|---|
| PART A | |
| carboxylic-functional butadiene/ acrylonitrile polymer (Goodyear Hycar® 1472) | 12 |
| diglycidyl ether of tetrabromo bisphenol A (Dow DER® 542) | 65 |
| diglycidyl ether of bishpenol A (Dow DER® 331) | 65 |
| bisphenol A | 2 |
| triphenyl phosphine | 0.1 |
| diaminodiphenyl sulfone (Ciba Geigy Eporal® HT-976) | 6.0 |

The pre-mix, or "prereact", was then charged to a vessel with the following additional ingredients:

|  | parts by weight |
| --- | --- |
| prereact (Part A) | 150.1 |
| Part B | |
| tetra(4,4')N-glycidylmethylene dianiline | 36.0 |
| diaminodiphenyl sulfone | 16.0 |
| dicyandiamide (American Cyanamid) | 8.0 |
| carboxylic-functional butadiene-<br>   acrylonitrile polymer | 12.0 |
| titanium dioxide | 1.0 |
| Amaplast yellow, dye | 0.05 |
| Green 2 Base, dye | 0.05 |

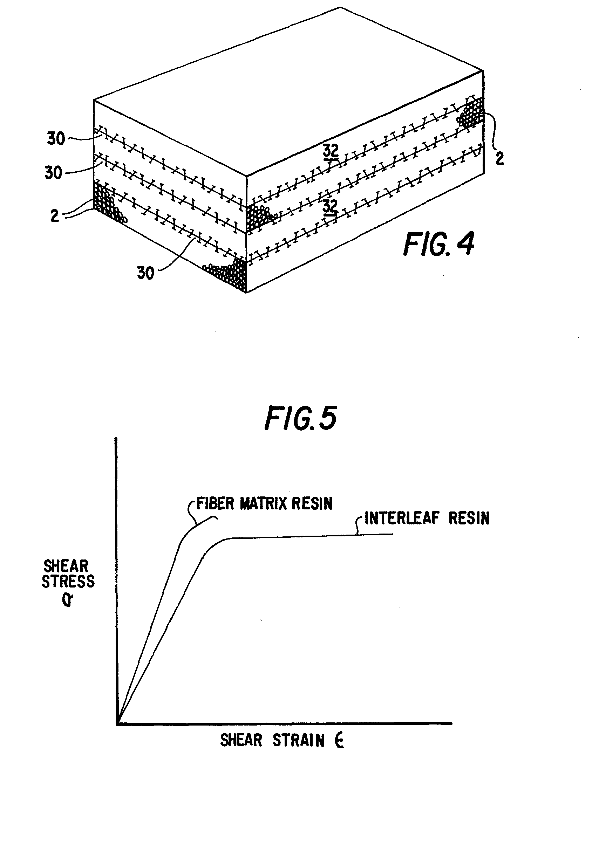

The viscosity of the interleaf resin must be sufficiently high to provide the interleaf with the necessary toughness and to maintain the interleaf resin as a discrete layer adjacent to the fiber resin matrix 18. As previously mentioned, however, crosslinking at the interface between the two resin layers is desirable (and most preferred). As best seen in FIGURE 4 a stack of two composites are shown with the cross-linked interface 30 and discrete interleaf layer 32. This condition will occur when the resin of the interleaf 22 is both chemically compatible with the resin of the fiber resin matrix 18 so as to promote cross-linking and loaded with the necessary amount of elastomeric (rubbery) material to define a discrete interleaf layer 32.

Practice has taught that the resin of the interleaf 22 containing the necessary amount of rubber will have a Flow Test Number (flow percent), N, measuring less than about 12 from the following viscosity test:

FLOW (VISCOSITY) TEST

1. Prepare a laminate by coating 0.02 pounds per square foot of interleaf resin onto 120 glass fabric.

2. Stack four, 4" x 4" square plies of the laminate.

3. Weigh the uncured 4-ply stack.

4. Cure the stack at 325°F and 60 psi for 15 minutes.

5. Trim all resin that is squeezed beyond the edges of the 120 glass fabric during the curing step (4).

6. Weigh the cured, trimmed stack.

7. Obtain the flow percentage, N, as follows:

$$N = \frac{(\text{weight of uncured stack}) - (\text{weight of trimmed cured stack})}{(\text{weight of uncured stack})} \times 100$$

The determination that a flow percent N below about 12 is required for proper performance under this invention is based on experimental data that shows that good interleaf material is obtained when the N flow number is between 5.5 and 7.7 and that poor interleaf material has been obtained when the N flow number is above 14.6.

A composite 24 was formed as shown in FIGURE 2, stacked and autoclave cured at 350°F and 100 psi for 2 hours to produce a structural part. Stacks of eight plies, all arranged with collimated fibers, i.e., extending in the same direction (0°), were prepared for the UNI-COMP test. Stacks of sixteen plies with the fibers oriented equally at 0°, 90° and ± 45° were prepared for the QUASI-COMP test. Stacks of thirty-six plies with the fibers oriented at relative angles of 0°, 90° and ±45° were prepared for the COMP/IMPACT test. The properties exhibited by the parts with viscosity flow numbers N below 7.7 gave an average compression strength when tested variously as follows:

|        | UNI-COMP @200°F Wet | QUASI-COMP @200°F Wet | COMP/IMPACT 1500 in-lbs/in |
|--------|---------------------|------------------------|----------------------------|
| Test 1 | 92,900 psi          | 61,800 psi             | 48,300 psi                 |
| Test 2 | 97,000 psi          | 65,200 psi             | 41,300 psi                 |
| Test 3 | 85,100 psi          | 64,500 psi             | 41,400 psi                 |

In practice, the interleaf material can be used to form a variety of different parts. For example, cover structures for airplane parts may be formed of fiber resin matrix-interleaf sheets stacked and cured to form 0.10-inch to 0.25-inch thin structural parts. Structural members such as wing panels will be much thicker.

The fiber resin matrix-interleaf sheets 24 range in thickness from 0.005 to 0.010 inch, thus, for example, a stack of twenty-five to fifty fiber resin matrix-interleaf sheets will form a ¼-inch thick part. The fiber resin matrix-interleaf sheets 24 are stacked with the direction of the fibers oriented in different directions, depending on the stress requirements of the part. For example, the maximum number of fiber resin matrix-interleaf sheets may be oriented in the 0° direction; i.e., the direction in which the maximum tension or compression forces will be imposed, and the remainder of the fiber resin matrix-interleaf sheets are oriented at 90° and plus or minus 45° from the 0° orientation.

The relative thickness of the layers of the fiber resin matrix-interleaf resin sheet is also important. Preferably the interleaf layer will be in the range of about .0007 in. to .0014 in., and the fiber resin matrix layer will be in the range of about .007 in. to .009 in.

Besides compression strength and flow data, an indication of the perfomance of laminated fiber resin matrix composites can be gained by subjecting cured samples of the resins to shear forces, and measuring the elongation (in inches) as a function of applied force (in lbs). The data from this test may be plotted, which typically generates a curve that ends at the point of applied force and elongation where the sample breaks. From this curve, the shear strain and shear stress of the resins can be calculated and the characteristic stress/strain curves plotted. An illustration of such stress/strain curves is provided in FIGURE 5. The testing procedure is described more fully in Krieger, Jr., R.B., "Stiffness Characteristics of Structural Adhesives For Stress Analysis in Hostile Environment," American Cyanamid Co., Bloomingdale Plant, Havre de Grace, MD (May, 1979), incorporated herein by reference.

When the fiber resin matrix and interleaf resin are properly matched according to the present invention, the shear stress/strain curves at various temperatures for the matrix resin and the interleaf resin show the high modulus and other properties (yield, strain to failure, ultimate stress) discussed previously.

One preferred embodiment of the matrix resin/interleaf resin is shown for illustration in FIGURE 5. Both resins show high modulus and high ultimate strength, and the interleaf resin shows high strain just below the ultimate strength of the matrix resin, with a strain to failure greater than 15%.

Examples 2-4 and comparative examples

Samples of a matrix resin and two batches of an interleaf resin prepared as described above were tested for resistance to shear force and elongation. From the force/elongation curves, shear stress and shear strain data were calculated. The stress/strain data show several important features of each resin, including the ultimate stress (failure), the "knee" or yield point, if any, at which the sample begins to exhibit a relatively great elongation per incremental rise in applied shear force, and the initial modulus (indicated by the initial slope of the curves).

These samples were compared against matrix and interleaf resins prepared according to examples of U.S. 3,472,730 (Frigstad). The following results were recorded:

In the following tables, the following abbreviations are used:

Ultimate shear strength (psi), ULf

Ulitimate strain to failure*, e(ul)

Shear strength at yield point (knee) (psi), KNf Shear strain at knee, e(kn)

Initial modulus (psi), G

* since the strain is calculated as the change in length of the sample divided by the initial thickness, the measurement has no units.

Matrix resin (this invention)

| | -67°F | | Room Temp. | | 200°F | |
|---|---|---|---|---|---|---|
| ULf | 5274 | 4863 | 4589 | 5555 | 5694 | 5452 |
| e(ul) | .055 | .031 | .051 | .08 | .26 | .24 |
| KNf | - | - | - | - | 5042 | 4794 |
| e(kn) | - | - | - | - | .087 | .019 |
| G | 128,900 | 232,900 | 126,500 | 120,300 | 108,000 | 94,200 |

Interleaf, batch A (this invention)

| | -67°F | | Room Temp. | | 200°F | |
|---|---|---|---|---|---|---|
| ULf | 9945 | 9167 | 7222 | 7260 | 4375 | 4750 |
| e(ul) | .15 | .092 | .18 | .25 | .51 | .60 |
| KNf | - | - | 6305 | 6219 | 3520 | 3819 |
| e(kn) | - | - | .069 | .08 | .070 | .076 |
| G | 144,000 | 178,600 | 138,900 | 130,800 | 81,700 | 94,200 |

Interleaf, batch B (this invention)

| | -67°F | | Room Temp. | | 200°F | |
|---|---|---|---|---|---|---|
| ULf | 6520 | 6879 | 7768 | 7671 | 5164 | 5176 |
| e(ul) | .045 | .061 | .39 | .35 | .43 | .44 |
| KNf | - | - | 6419 | 6219 | 3877 | 3823 |
| e(kn) | - | - | .091 | .073 | .053 | .056 |
| G | 199,300 | 151,500 | 157,400 | 156,600 | 150,700 | 139,700 |

Matrix Resin X (Frigstad, Example 1)*

| | -67°F | | Room Temp. | | 200°F | |
|---|---|---|---|---|---|---|
| ULf | 1932 | 2686 | 5246 | 2257 | 3288 | 2575 |
| e(ul) | .02 | .02 | .068 | .033 | .94 | .78 |
| KNf | — | — | — | — | 1918 | 1780 |
| e(kn) | — | — | — | — | .056 | .052 |
| G | 134,124 | 159,000 | 145,059 | 104,524 | 65,532 | 59,333 |

*Formulation: 100 parts epoxy resin (Ciba Geigy ECN® 1273); 47.4 parts methylbicyclo(2.2.1)-heptene-2,3-dicarboxylic anhydride isomers (Nadic® methyl anhydride); 2.9 parts zinc salt of 2-ethylhexanoic acid and decyl diphenylphosphite (Argus® DBVIII).

Interleaf Resin X (Frigstad, Example 1 "A")*

| | -67°F | | Room Temp. | | 200°F | |
|---|---|---|---|---|---|---|
| ULf | 3554 | 2781 | 1096 | 792 | 1849 | 2151 |
| e(ul) | .33 | .24 | .21 | .65 | .43 | .61 |
| KNf | 2094 | 1986 | — | — | — | — |
| e(kn) | .042 | .056 | — | — | — | — |
| G | 88,571 | 88,571 | 54,800 | — | — | — |

*Formulation: 46.6 parts epoxy resin (Ciba Geigy ECN® 1273); 22.1 parts Nadic® methyl anhydride; 1.3 parts phenol salt of triamyl amine; 30 parts carboxylated acrylonitrile-butadiene elastomer (Hycar® 1072).

Interleaf Resin X2 (Frigstad, Example 1"B")*

|  | -67°F | | Room Temp. | | 200°F | |
|---|---|---|---|---|---|---|
| ULf | 2139 | 4369 | 1732 | 1861 | 753 | 667 |
| e(ul) | .91 | .43 | 1.37 | 1.13 | .78 | .92 |
| KNf | - | 3375 | - | - | - | - |
| e(kn) | - | .077 | - | - | - | - |
| G | 16,356 | 95,053 | - | - | - | - |

*Formulation: 33.2 parts Ciba Geigy ECN® 1273; 15.8 parts Nadic® methyl anhydride; 1.0 parts phenol salt of triamyl amine; 50 parts Hycar® 1072.

Interleaf Resin Y (Frigstad, Example 3 "A")*

|  | -67°F | | Room Temp. | | 200°F | |
|---|---|---|---|---|---|---|
| ULf | 1722 | 1736 | 1917 | 1736 | 1347 | 1278 |
| e(ul) | .021 | .023 | .024 | .033 | .18 | .11 |
| KNf | - | - | - | - | - | - |
| e(kn) | - | - | - | - | - | - |
| G | 162,000 | 115,800 | 112,300 | 112,567 | 40,800 | 92,600 |

*Formulation: 59.8 parts Ciba Geigy ECN® 1273; 28.4 parts Nadic® methyl anhydride; 1.7 parts phenol salt of triamyl amine; 10 parts polyvinyl formal resin (Formvar®).

Interleaf Resin Y2 (Frigstad, Example 3 "B")*

| | -67°F | | Room Temp. | | 200°F | |
|---|---|---|---|---|---|---|
| ULf | 5403 | 5274 | 6250 | 6125 | 1167 | 1028 |
| e(ul) | .039 | .038 | .25 | .25 | .72 | .55 |
| KNf | – | – | 5833 | 5694 | – | – |
| e(kn) | – | – | .08 | .059 | – | – |
| G | 195,300 | 168,100 | 107,318 | 191,000 | – | – |

*Formulation: 46.6 parts Ciba Geigy ECN® 1273; 22.1 parts Nadic® methyl anhydride; 1.3 parts salt of amine; 20 parts polyvinyl formal resin.

From the foregoing shear test data, it can be concluded that while the matrix resin and interleaf resin combination of the present invention provides a high strength, high modulus, high elongation system, the Frigstad resins are low strength and not advantageously matched. More particularly, the Frigstad matrix resin is a brittle resin with little elongation at room temperature and -67°F; and at 200°F, the matrix resin has a very low modulus, very low strength, and very high elongation. Such a material would be unsuitable for use at high temperatures. The interleaf resins X and X2 both show extremely low modulus at all temperatures and low shear strength. Consequently, in spite of their high elongations, they would be unsuitable as an interleaf resin according to the present invention. The Y interleaf resin is very similar to the X interleaf resins, and similarly unsuitable. The Y2 interleaf resin has a high (above 145,000) modulus at room temperature, high strength, and a strain to failure above 20%; however, the strength and modulus both drop to low levels at 200°F and consequently become much less suited to the purposes herein.

The foregoing samples tested for shear resistance were additionally subjected to flow tests. Resin samples were coated at .06 lb/sq. ft. on 6302 nylon carrier, which was then sandwiched between porous Armalon, with 7781 glass bleeders. The laminate was press cured 20 minutes at 30 psi and 325°F. The following results were observed:

| Material | Flow, % |
|---|---|
| Interleaf resin, Batch A | 27.8% |
| Interleaf resin, Batch B | 32.0% |
| | |
| Matrix resin (Frigstad) | 0.61% |
| Interleaf resin X | 2.39% |
| Interleaf resin X2 | 1.35% |
| Interleaf resin Y | 6.21% |
| Interleaf resin Y2 | 3.68% |

Some of the comparison samples were too viscous to coat at the usual .02 lb/sq. ft., so all samples were tested at .06 lb/sq. ft. coatings. The greater amount of resin employed led to a greater amount of resin flow and accounts for the higher than usual flow numbers for the interleaf resins of the present invention.

The flow data indicate that all of the formulations from the Frigstad patent have considerably lower flow than the interleaf resins of the present invention. This may be due to very high elastomer content in most of the formulations.

Examples 6-8

The matrix resin and interleaf resin and B, shear tested above, were used to prepare three composites according to the present invention for compression testing. Fiber resin matrix-interleaf resin composite sheets were prepared as outlined below, autoclave cured at 350°F and 100 psi for two hours, arranged in 6-ply, 8-ply and 24-ply laminates, then subjected to UNI-COMP, QUASI-COMP, and COMP-IMPACT testing as described previously.

The formulations were as follows:

| Sample | Reinforcing Fiber | Interleaf | Resin (wt.%) |
|---|---|---|---|
| 6 | graphite* | batch B | 44-55% |
| 7 | graphite* | batch B | 44-55% |
| 8 | graphite** | batch B | 44-55% |

*Hercules® AS-6, Hercules, Inc.
**Celion® 6000, Celanese Corp.

The following results were observed:

|  | UNI-COMP | | | |
|---|---|---|---|---|
|  | SAMPLES | | | |
| Conditions | Sample 6 | Sample 7 | Sample 8 | Ave. |
| Room Temp. | 173,300 | 163,500 | 160,000 | 165,600 |
| 180°F | 123,800 | 139,300 | 128,800 | 130,600 |
| 200°F | 116,100 | 129,500 | 131,300 | 125,600 |
| 180°F, wet* | 99,700 | 103,400 | 108,200 | 103,800 |
| 200°F, wet* | 88,400 | 90,100 | 100,200 | 92,900 |

*wet = immersed in water (160°F) for 14 days.

QUASI-COMP

| Conditions | SAMPLES | | | |
| --- | --- | --- | --- | --- |
| | Sample 6 | Sample 7 | Sample 8 | Ave. |
| Room Temp. | 93,000 | 93,600 | 93,000 | 93,200 |
| 180°F | 78,200 | 88,300 | 72,700 | 79,700 |
| 200°F | 73,400 | 80,400 | 73,400 | 75,700 |
| 180°F, wet* | 69,500 | 67,600 | 66,400 | 67,800 |
| 200°F, wet* | 62,500 | 61,200 | 59,900 | 61,200 |

*wet = immersed in water (160°F) for 14 days.

COMP-IMPACT

| Conditions | SAMPLES | | | |
| --- | --- | --- | --- | --- |
| | Sample 6 | Sample 7 | Sample 8 | Ave. |
| 1500 in-lb/in | 46,100 | 47,500 | 42,200 | 45,300 |

Many variations of the invention will suggest themselves to those skilled in this art in light of the above detailed description, and all such obvious variations are within the full intended scope of this invention. For example, other filaments, such as carbon, silicon carbide, boron, aramid, polyester, polyamide, and rayon, or metal-coated, such as nickel- and/or silver-coated such filaments and fibers, alone or in any combination, can be used.

Matrix resin and interleaf resin formulations also can be varied in weight ratio widely, depending on the precise properties desired and the intended use. By way of illustration, where the preferred embodiment of the examples is used, the preferred weight ratios are as follows:

| Matrix Resin | Parts by Weight | |
| --- | --- | --- |
| | Preferred | Most Preferred |
| (i) tetra (4,4') N-glycidyl dianiline | 50-100 | 75-85 |
| (ii) tetraglycidoxy tetra-phenylethane | 0-50 | 15-25 |
| (iii) trimethylene glycol di-para-aminobenzoate | 28-60 | 35-45 |
| (iv) fumed silica | 0-12 | 5-7 |
| (v) reaction product of toluene diisocyanate and dimethylamine | 0.1-2.5 | 0.1-2.5 |

The interleaf resin, Parts A and B likewise can be mixed in broad ranges, but preferably, and most preferably the weights of ingredients used will fall in the following ranges:

| Interleaf, PART A | Parts by Weight | |
| --- | --- | --- |
| | Preferred | Most Preferred |
| (i) a carboxylic-functional butadiene-acrylonitrile copolymer | 6-18 | 10-15 |
| (ii) diglycidyl ether of tetrabromobisphenol A | 0-130 | 55-75 |
| (iii) diglycidyl ether of bisphenol A | 0-130 | 55-75 |
| (iv) bisphenol A | 1-6 | 1-3 |
| (v) triphenyl phosphine | 0.05-0.25 | 0.05-0.15 |
| (vi) diaminodiphenyl sulfone | 2-12 | 3-9 |

Interleaf, PART B

| | | | |
|---|---|---|---|
| (i) tetra (4,4') N-glycidyl | | | |
| methylenedianiline | 25-50 | 30-40 |
| (ii) diaminodiphenyl sulfone | 10-30 | 10-20 |
| (iii) dicyandiamide | 2-12 | 5-10 |
| (iv) a carboxylic functional | | | |
| butadiene-acrylontrile | | | |
| copolymer | 6-18 | 10-15 |
| (v) titanium dioxide | 0.5-1.5 | 0.05-1.5 |

Wide proportions of Part A to Part B can be used, but preferably, from 75 to 200 parts by weight of Part A will be present for each 100 parts by weight of Part B. All such obvious variations are within the full intended scope of the invention as defined by the appended claims.

CLAIMS

1.  A reinforced interleafed filament resin matrix composite comprised of:

(A)  a fiber resin matrix composition;

(B)  an interleaf sheet formed of a heat-curable resin containing elastomeric material and having a polymer composition chemically compatible with the resin of the fiber resin matrix composition to form a cross-linked interface at the boundary between the fiber resin and the interleaf sheet and a discrete elastomeric layer.

2.  A reinforced interleafed filament resin matrix composite as in Claim 1 wherein the elastomeric content of the interleafing sheet is above about 8 per cent.

3.  A reinforced interleaf filament resin matrix composite as in Claim 1 wherein the viscosity of the interleaf measures an N number less than 14.6 when measured by the Flow (Viscosity) Test.

4.  A reinforced interleaf filament resin matrix composite as in Claim 1 wherein the viscosity of the interleaf measures an N number less than 12 when measured by the Flow (Viscosity) Test.

5.  A reinforced interleaf filament resin matrix composite as in Claim 1 wherein the viscosity measures an N number less than 7.7 when measured by the Flow (Viscosity) Test.

6.  A reinforced interleafed filament resin matrix composite as in Claim 1 wherein the fiber resin matrix composition component (A) is comprised of:

(i)  reinforcing filaments; and

(ii)  a heat-curable resin in which the reinforcing filaments are imbedded.

7. A reinforced interleafed filament resin matrix composite as in Claim 6 wherein component (ii) is comprised of an epoxy resin prepolymer.

8. An interleafed fiber resin matrix composite which comprises:

(A) A fiber resin matrix layer comprising (i) high-strength reinforcing filaments and (ii) a thermosetting epoxy resin composition coating said filaments, and

(B) A discrete interleaf resin layer comprising (i) a thermosetting epoxy resin composition containing (ii) 8% to 70% by weight of a rubbery vinyl addition polymer,

wherein said epoxy resin composition (A)(ii) exhibits shear modulus of at least 90,000 psi at high temperatures or at least 50,000 psi at high temperatures under wet conditions, and said interleaf resin (B) exhibits shear modulus of at least 50,000 psi and a yield strength of at least 3000 psi at high temperatures, and shear strain to failure of at least 6% at -67°F and at least 15% at room temperature.

9. An interleafed fiber resin matrix composite comprising:

(A) a fiber resin matrix comprising:

(i) 60%-70% by weight high-strength reinforcing filaments selected from the group consisting of carbon fibers, graphite fibers, nickel-coated such fibers, silver-coated such fibers, nickel and-silver-coated such fibers, and combinations thereof, and

(ii) 30%-40% by weight of a thermosetting epoxy resin composition coating said filaments, said epoxy resin composition comprising:

(a) a polyepoxide compound or combination of compounds,

(b) a curing agent effective to catalyze polymerization of said polyepoxide compound, and

(c) a filler; and

(B) a discrete interleaf resin layer comprising:

(i) 40%-70% by weight a prereact comprising:

(a) a conjugated diene elastomer,

(b) a polyepoxide compound or combination of polyepoxide compounds, and

(c) a curing agent effective to catalyze polymerization of said polyepoxide compound, in intimate admixture with

(ii) 60%-30% by weight of a thermosetting epoxy resin composition comprising

(a) a polyepoxide compound or a combination of polyepoxide compounds, wherein said poly-epoxide compound or combination (B)(ii)(a) is not the same compound or combination as that of the prereact component (B)(i)(b),

        (b) a curing agent effective to catalyze
polymerization of said polyepoxide compound,
and

        (c) a conjugated diene elastomer;
wherein said epoxy resin composition (A)(ii) exhibits
shear modulus of at least 50,000 psi at high temperatures
under wet condiditions, and said interleaf resin (B)
exhibits shear modulus of at least 50,000 psi and a
yield strength of at least 3000 psi at high temperatures,
and shear strain to failure of at least 6% at -67°F, at
least 15% at room temperature and at least 25% at high
temperatures.

10.   An interleafed fiber resin matrix composite comprising:

(A) A fiber resin matrix layer comprising:

(i) 60%-70% by weight high-strength reinforcing filaments selected from the group consisting of carbon fibers, graphite fibers, nickel-coated such fibers, silver-coated such fibers and nickel-and silver-coated such fibers, and

(ii) 30%-40% by weight of a thermosetting epoxy resin composition coating said filaments, said epoxy resin composition comprising:

(a) 50-100 parts by weight of tetra (4,4')N-glycidyl methylene dianiline,

(b) 0-50 parts by weight tetra-glycidoxy tetraphenylethane,

(c) 28-60 parts by weight trimethylene glycol di-para-aminobenzoate,

(d) 0-12 parts by weight fumed silica, and

(e) 0.1-2.5 parts by weight of the reaction product of toluene diisocyanate and dimethylamine; and

(B)   A discrete interleaf resin layer comprising

(i) 40%-60% by weight of a prereact comprising:

(a) 6-18 parts by weight of a carboxylic-functional butadiene-acrylonitrile copolymer,

(b) 0-130 parts by weight of a diglycidyl ether of tetrabromo bisphenol A,

(c) 0-130 parts by weight of a diglycidyl ether of bisphenol A,

(d) 1-6 parts by weight of bisphenol A,

(e) 0.05-0.25 parts by weight of triphenyl phosphine, and

　　　　　(f) 2-12 parts by weight of diaminodiphenyl sulphone, in intimate admixture with
　　　　(ii) 40%-60% by weight of a thermosetting
epoxy resin composition comprising:
　　　　　　(a) 25-50 parts by weight of tetra
(4,4')N-glycidyl methylene dianiline,
　　　　　　(b) 10-30 parts by weight diaminodiphenyl
sulfone,
　　　　　　(c) 2-12 parts by weight of dicyandiamide,
　　　　　　(d) 6-18 parts by weight of a carboxylic-
functional butadiene-acrylonitrile copolymer,
and
　　　　　　(e) 0.5-1.5 parts by weight of titanium
dioxide.

11.　An interleafed fiber resin matrix composite
which comprises:
　　　　(A) A fiber resin matrix layer comprising (i)
60%-70% by weight high-strength reinforcing filaments
and (ii) 30%-40% by weight of a thermosetting epoxy
resin composition coating said filaments, and
　　　　(B) A discrete interleaf resin layer comprising
(i) a thermosetting epoxy resin composition containing
(ii) 8% to 70% by weight of a rubbery vinyl addition
polymer,
wherein said thermosetting epoxy resin composition
(A)(ii), subjected to shear forces at 200°F, has an
ultimate stress of at least 5000 psi, and wherein said
interleaf resin (B), subjected to shear at 200°F
has a yield stress of at least 4000 psi, an ultimate
stress of at least 5000 psi, and strain to failure of at
least 15%, and wherein the shear modulus for epoxy resin
composition (A)(ii) is at least 100,000 psi, and the
shear modulus for interleaf resin (B) below the yield
point is at least 100,000 psi.

12. An interleafed fiber resin matrix composite which comprises:

(A) A fiber resin matrix layer comprising (i) high-strength reinforcing filaments and (ii) a thermosetting epoxy resin composition coating said filaments, and

(B) A discrete interleaf resin layer comprising (i) a thermosetting epoxy resin composition containing (ii) up to 70% by weight of a rubbery vinyl addition polymer,

wherein the shear stress and shear strain properties of the thermosetting epoxy resin composition (A)(ii) and interleaf resin (B) are substantially as represented in Figure 5.

13. A process for producing an interleafed filament resin matrix comprising the steps of:

(i) forming a fiber resin matrix composition;

(ii) forming an interleaf cross-linked resin interface layer at the surface of the fiber resin matrix; and

(iii) forming a discrete interleaf layer of polymer containing elastomer adjacent the interface layer.

14. A process as in Claim 13 wherein the viscosity of the interleaf material measures an N number of 12 or less when measured by the Flow (Viscosity) Test.

15. A process as in Claim 13 wherein the interleaf material is at a viscosity which measures an N number of 7.7 or less when measured by the Flow (Viscosity) Test.

0133280

1/2

FIG.1

FIG.2

FIG.3

2/2

FIG.4

FIG.5

SHEAR
STRESS
σ

FIBER MATRIX RESIN

INTERLEAF RESIN

SHEAR STRAIN ε